# EUROPEAN PATENT APPLICATION

(11) **EP 1 971 174 A2**
(43) Date of publication of application: **17.09.2008**
(21) Application number: 07425125.7
(22) Date of filing: 06.03.2007
(51) Int. Cl.: H04Q 7/38

(54) **Method for synchronizing resources reconfiguration inside an UMTS radio access network**

(71) Applicant: Siemens Networks S.p.A., 20126 Milano (IT)
(72) Inventor: De Benedittis, Rossella, 20137 Milano (IT); Durastante, Gianluca, 67040 Poggio Di Roio (IT); Prete, Annunziata, 84014 Nocera Inferiore (IT)

(57) **Abstract**

Synchronous reconfiguration of a radio link existing between an UMTS terrestrial radio access network (UTRAN) and a user equipment (UE) entails at each involved network element the reconfiguration of all internal and external resources (that is, at the interfaces) for sustaining transport connections according to the new radio bearer configuration. As a first reconfiguration step, the Serving Radio Network Controller (SRNC) sends to a Drift RNC (DRNC) a RNSAP: RL RECONF COMMIT message appositely modified to convey two independent Activation Time IEs. A first one indicates to the Node B (and the UE) the frame number to switch to the prepared configuration. The second one, derived by a time base common to SRNC and DRNC, indicates to DRNC the frame number to switch to the prepared configuration. The second IE is always included when the transport connections at the lur interface are based on IP protocol. The DRNC in its turn sends to the Node B a RL RECONF COMMIT message, compatible with the NBAP protocol, deprived of the second Activation Time IE. The Node B, upon the reception of said NBAP message, waits for the frame number indicated by the first Activation Time IE and switches to the prepared configuration (fig.4).

## Description

### FIELD OF THE INVENTION

The present invention relates to the field of 3GPP (3rd Generation Partnership Project) UMTS (Universal Mobile Telecommunication System) networks, and more precisely to a method for synchronizing resources reconfiguration inside an UMTS radio access network.

### BACKGROUND ART

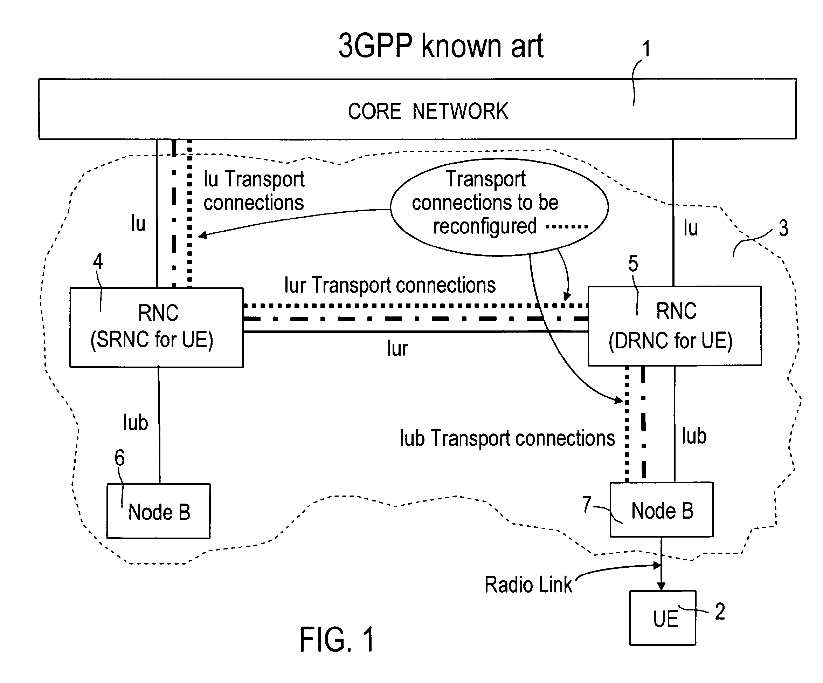

**Fig.1** shows the main functional blocks of a 3GPP UMTS network comprising: a Core Network (CN) 1 accessed by a User Equipment (UE) 2 through an UTRAN (UMTS Terrestrial Radio Access Network) 3. The latter includes two Radio Network Controllers (RNCs) 4 and 5 and two Base Stations 6 and 7 called Nodes B. The RNCs 4 and 5 are connected to the Core Network 1 via an lu interface and to a respective Node B via an lub interface. The Node B 7 is connected to the UE 2 via one or more Radio Links. As far as the actual state of the connection between the Core Network 1 and the UE 2 is concerned, the two RNCs 4 and 5 are distinguished in Serving RNC (SRNC) 4 and Drift RNC (DRNC) 5 that are connected to each other via a lur interface. The information exchanged between CN 1 and UE 2 are conveyed on the terrestrial interfaces lu, lur and lub on a set of transport connections indicated by both dotted lines and dotted dashed lines. The SRNC 4 transmits/receives data to/from the UE 2 through the DRNC 5. The main technical feature of depicted functional blocks and their interfaces are described in the last valid version of the relevant 3GPP Technical Specifications (TS).

In the operation, the UTRAN 3 of **fig.1** includes one or more radio network subsystems (RNS). Each RNS includes an RNC and one or more Nodes B managed by the RNCs. Each UE connected to the UMTS network is managed at the lu interface towards the CN by only one RNC: the SRNC, which serves as an access point to the CN in order to transmit data of the specific UE and allocates a radio resource suitable for providing a service. If the UE moves into a region managed by a different RNC, it is connected to an SRNC by way of a DRNC of the region in which the UE has moved. The DRNC performs a simple partial function of routing user data assigning the requested resources over the air interface. That is, the discrimination of the SRNC and the DRNC is a logical discrimination related to a specific UE. In fact a DRNC for a given UE might play the role of SRNC for another UE. In the UTRAN structure each Node B necessarily has only one Controlling RNC (CRNC) which performs functions of controlling traffic load and congestion in a cell that the CRNC itself manages and a function of controlling acceptance of a new radio link set in the cell. The role of CRNC could also be assumed by DRNC or SRNC.

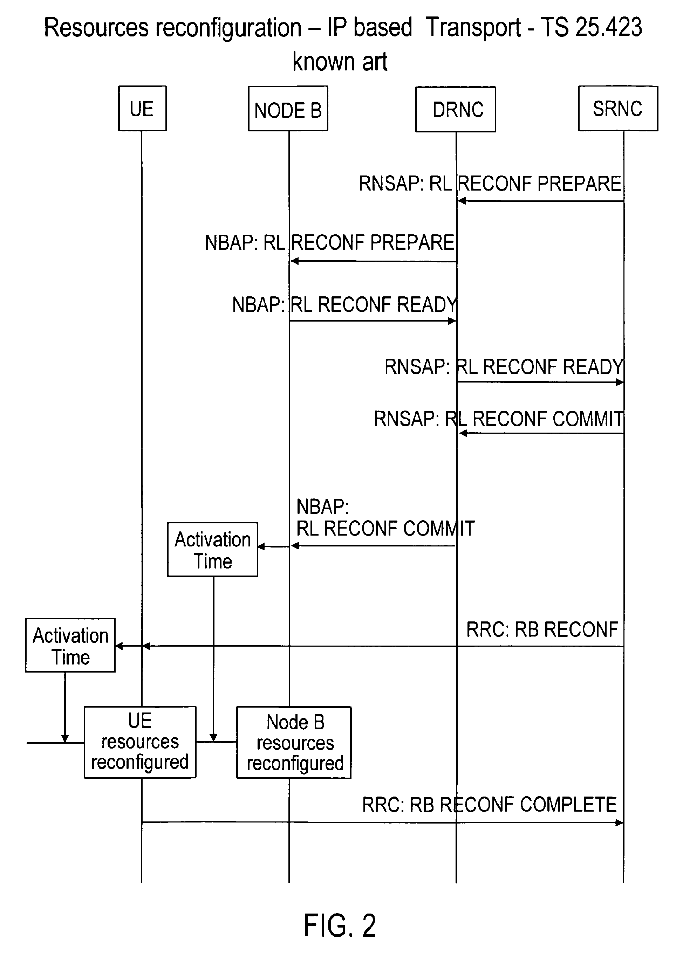

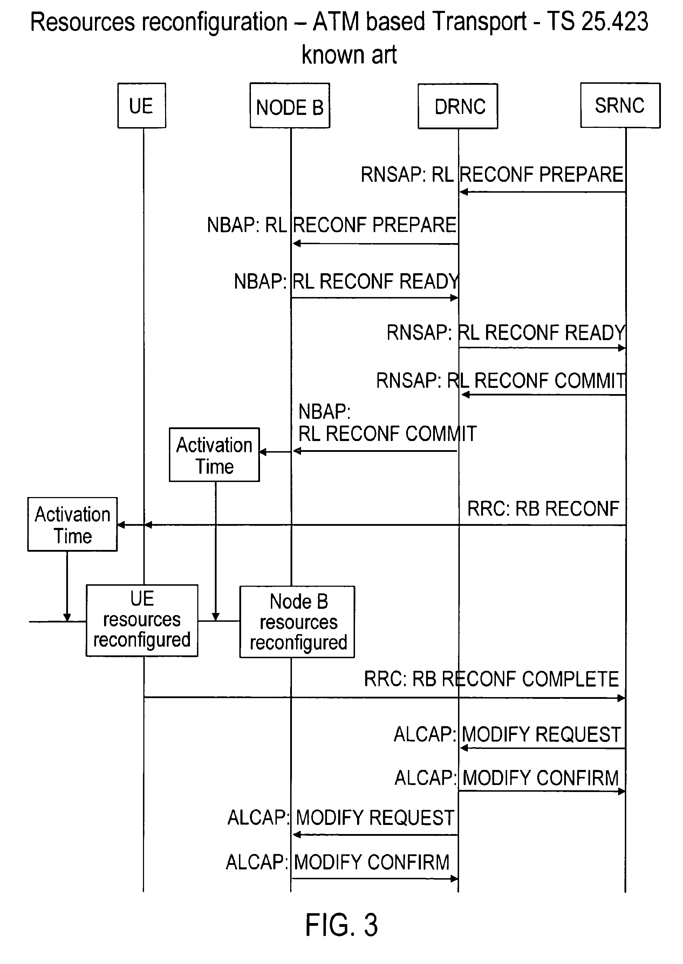

The inefficiency that the present invention is aimed to eliminate is about the reconfiguration of transport resources, i.e. bearer resources, when a set of existing radio links is reconfigured or interrupted or new radio links are added. Without limitation, the origin of the inefficiency will be highlighted with the help of **fig.2** referred to the specific case of Resource reconfiguration protocol running according to the present standardization inside the UTRAN of **fig.1** in case an IP (Internet Protocol) based transport is used, in particular at the lur interface, by comparison with the Resource reconfiguration protocol of **fig.3** running without inefficiency inside the same UTRAN for e.g. an ATM based transport, thanks to the introduction of some ALCAP (Access Link Control Application Protocol) synchronization steps.

Although the invention is not limited to the IP based transport, it is useful to remind that before the recent increase on the request for IP connections inside the cellular networks, especially UMTS, the transport service at the RAN (Radio Access Network) was in large part based on ATM, but now a mixed scenario ATM/IP exists, being the IP based transport the emerging technology for future developments in UMTS. An IP based transport avails of known protocols, e.g.: UDP, TCP, RTP, etc. in order to convey packet data that in their turn may be originated from different sources, such as: CS (Circuit Switched) voice calls, VolP (Voice over IP), computer files, real-time streaming media, etc. Due to the early stage of IP in the UMTS networks, some aspects about reconfiguration of resources are not yet completely assessed in the standardization still in progress and the aforementioned inefficiencies occur.

Both in **fig.2** and **fig.3** a Radio Link Reconfiguration Preparation procedure is always needed to prepare a new configuration of Radio Link(s) related to one UE-UTRAN connection within a DRNS (Drift Radio Network Subsystem). This preparation procedure shall use the signalling bearer connection for the relevant UE Context. Many causes may concur to reconfigure a radio link, e.g. the ones affecting the underneath resources:
■ Physical Channel Reconfiguration, this function allows the DRNC or Node B to reallocate the physical channel resources for a Radio Link.
■ DCH (Dedicated Channel) Modification/Deletion/Addition, this function allows to reconfigure a transport channel within the DRNC and the Node B. Modification may occur, for example, by changing the bitrate allowed to the transport channel. Deletion consists of release of resources. Addition consists in adding new resources.
■ HS-DSCH (High Speed Downlink Shared Channel) setup/modification.
■ Other RL and resources reconfiguration causes are more extensively illustrated in Technical Specifications (TS) of RNSAP (Radio Network Subsystem Application Part) protocol (see **TS 25.423**) and NBAP (Node B Application Part) protocol (see **TS 25.433**).

**Fig.2** reports a message time diagram of the signalling between SRNC, DRNC, Node B and UE according to the current standard for an IP based UMTS radio access network, when a synchronised Radio Link Reconfiguration procedure, involving the reconfiguration of a transport connection, is triggered by SRNC.

As shown in **fig.2****,** this procedure consists of the following steps:
STEP 1) - The SRNC sends the RL RECONFIGURATION PREPARE message via the RNSAP protocol to the DRNC to order a reconfiguration of an existing set of Radio Links that also includes the reconfiguration of one or more of the transport connections. If the requested reconfiguration is allowed by the DRNC and the DRNC has successfully reserved the required resources for the new configuration of the Radio Link(s), it shall send to the Node B a corresponding RL RECONFIGURATION PREPARE message via the NBAP protocol. If the requested reconfiguration is allowed by the Node B and the Node B has successfully reserved the required resources for the new configuration of the Radio Link(s), it shall respond to the DRNC via a RL RECONFIGURATION READY to indicate that it is ready to switch to the new configuration. The DRNC sends a corresponding RL RECONFIGURATION READY to the SRNC. When this step has been completed successfully there exists a Prepared Reconfiguration.
STEP 2) - The SRNC sends the RL RECONFIGURATION COMMIT message via the RNSAP protocol to the DRNC including the time instant at which the new configuration shall be activated, i.e. the so called "Activation Time". This time instant is indicated by specifying the "Connection Frame Number" at which the new configuration shall be applied. The DRNC sends a corresponding RL RECONFIGURATION COMMIT message (including the Activation Time information) via the NBAP protocol to the Node B. As a consequence, SRNC and Node B are aligned (synchronized) in the knowledge of the Activation Time.
STEP 3) - The SRNC sends to the UE the RADIO BEARER RECONFIGURATION message via the Radio Resource Control (RRC) protocol and indicates the same Activation Time as the one sent from SRNC to Node B in STEP2). As a consequence, SRNC and UE are aligned (synchronized) in the knowledge of the Activation Time.
STEP 4) - At the Activation Time, UE and Node B switch to the new configuration and reconfigure all the resources formerly needed to handle the external transport connections subjected to be reconfigured..
STEP 5) - The UE informs the SRNC of the applied reconfiguration by sending the RADIO BEARER RECONFIGURATION COMPLETE message via the RRC protocol
After STEP 5) all the UE, Node B, SRNC and DRNC should have been correctly reconfigured. However the following two problems occur:
   Considering STEP 3) and STEP 5) more in general, the following other opportunities are offered by the RRC protocol:
      ■ RADIO BEARER SETUP / RADIO BEARER SETUP COMPLETE, to add a radio bearer.
      ■ RADIO BEARER RELEASE / RADIO BEARER RELEASE COMPLETE, to tear down a radio bearer.
      ■ TRANSPORT CHANNEL RECONFIGURATION / TRANSPORT CHANNEL RECONFIGURATION COMPLETE, to modify a transport channel.

### OUTLINED TECHNICAL PROBLEM

In Step 2) the Activation Time is made available to DRNC and to Node B, however only the Node B is able to correctly decode the Activation Time, as the "time basis" used to specify its value is only known at the Node B and at the SRNC, but it is unknown at the DRNC. As a consequence, only SRNC and Node B are aligned in the knowledge of the Activation Time. The DRNC does not know the time instant at which it can release or modify the internal transport and user plane resources, as well as the external transport resources over lur, corresponding to the external transport connection to be reconfigured by: modification / deletion / addition. This can determine either the presence of hanging resources within the DRNC or loss of data due to inconsistencies between adjacent network elements.

At Step 4) no indications are sent from Node B to the Controlling RNC (i.e. to the DRNC) so the DRNC is not aware whether the Node B has correctly switched to the new configuration at the Activation Time.

As a consequence, the following inefficiencies arise in an UMTS radio access network when a synchronised Radio Link Reconfiguration procedure is performed involving either IP based transport connections at the lur interface or other protocols than ALCAP at the lur and lub interfaces deprived of a synchronization handshake mechanism:
1) Resources usage inefficiencies: the internal resources as well as the external transport resources needed to manage external connections keep being reserved in some network elements whereas they have already been released or modified and therefore made available for new establishments in some other network elements. This resource hanging prevents a percentage of network element resources from being used for the establishment of new connections and therefore shall be avoided as much as possible.
2) Resources usage inconsistencies: loss of data can occur when some network elements try to utilize external connections that are regarded as no longer available from a peer node or when new calls are admitted in the DRNC though the requested resource reconfiguration does not leave room to them.

With reference to **fig.3****,** problems highlighted at STEP 2) and STEP 4) above do not occur in an ATM based UMTS access network due to the presence of a further ALCAP protocol step. **Fig.3** differs from **fig.2** for the only addition of four ALCAP messages in the bottom part which together constitute the following step:
STEP 6) - The SRNC sends to the DRNC the ALCAP: MODIFY REQUEST message (see ITU-T Q.2630.2) which triggers the internal and external transport resources modification in the DRNC. The DRNC sends back the ALCAP: MODIFY CONFIRM message to the SRNC and forwards the ALCAP: MODIFY REQUEST message to the Node B, which triggers the internal and external transport resources modification in the Node B. The latter sends back the ALCAP: MODIFY CONFIRM to the DRNC.
In case of transport resource release, the ALCAP RELEASE and ALCAP RELEASE CONFIRM messages are used in place of the ALCAP MODIFY REQUEST and ALCAP MODIFY CONFIRM.
In case of transport resource addition, the ALCAP ESTABLISHMENT and ALCAP ESTABLISHMENT CONFIRM messages are used in place of the ALCAP MODIFY REQUEST and ALCAP MODIFY CONFIRM.
Basic functionality of ALCAP is multiplexing of different users onto one AAL2 (ATM Adaptation Layer 2) transmission path using CIDs (Channel Identifiers).
The AAL type 2 signalling entity provides the following services to the AAL type 2 served user across the A2SU-SAP:
- establishment of AAL type 2 connections;
- release of AAL type 2 connections; and
- modification of AAL type 2 connection resources.

To sum up, the technical problem to be solved by the present invention is that to prevent the possible misalignment among time instants at which the different network elements reconfigure the respective internal and external transport resources when e.g. external transport connections are either modified, or added, or released. If these time instants are not properly aligned, the current 3GPP specifications (i.e. TS25.423, TS25.433) do not provide a clear solution to the problem highlighted at STEP 2) and STEP 4) above. In fact, no messages from Node B to either DRNC or SRNC are foreseen to inform them that it has correctly switched to the new configuration. This problem is largely independent of the type of transport at the lur interface but only depends on some defectiveness in the RNSAP and NBAP protocols.

Possible workaround to solve the problems can be the following: according to 3GPP specifications, the Activation Time value spans from 0 to 255 radio frames (i.e. from 0 to 2550 ms). Taking into account that the DRNC is not able to decode it, it can switch to the new configuration only after a time interval equal to at least 2550 ms has elapsed from the time at which the RL RECONFIGURATION COMMIT message was received from the SRNC. This solution leads to the presence of hanging resources within the DRNC during the time period from the "DRNC-unknown" Activation Time to the actual DRNC resource reconfiguration time. Considering the Activation Time span, this time period can be in the order of some seconds. This is clearly unacceptable as normal handling.

### OBJECT OF THE INVENTION

The main object of the present invention is that to overcome the inefficiencies of the current 3GPP standardization in the reconfiguration of transport resources in a Radio Access Network with an IP based transport, and indicate a possible solution for this drawback.

### SUMMARY OF THE INVENTION

The invention achieves said object by providing a method for reconfiguring the resources assigned to the elements of a radio access network of a cellular communication system and to a user equipment in order to give support to their reciprocal connection through a radio link, including the steps of:
a) sending, by a first radio network controller charged to serve said user equipment to a second radio network controller acting on behalf of the first one, a first reconfiguration message including:
   ■ a first information element about a first activation time assigned by the first radio network controller to the base station for triggering the very time instant at which the new configuration shall be actualized at the base station,
   ■ a second information element about a second activation time derived by a time reference which is common to the first and the second radio network controllers, assigned by the first radio network controller for triggering the very time instant at which the new configuration shall be actualized at the second radio network controller;
b) sending, by the second radio network controller, to the base station a second reconfiguration message including the only first information element;
c) sending, by the first radio network controller to the user equipment, a radio bearer reconfiguration message including said first information element;
d) receiving, by the second radio network controller, said first reconfiguration message, decoding the second information element and when the second activation time is reached, reconfiguring its internal and external resources needed to handle the external transport connections;
e) receiving, by the base station, said first radio link reconfiguration message and, when the first activation time is reached, reconfiguring its internal and external resources needed to handle the external transport connections;
f) receiving, by the user equipment, said radio bearer reconfiguration message and, when the activation time is reached, reconfiguring all the bearer resources assigned to the radio link.

Additional features of the present invention which are believed to be novel are set forth with particularity in the appended claims.

According to the invention, the user equipment, independently of steps after c) sends to the first radio network controller a Radio Bearer Reconfiguration Complete message to inform it that the radio link reconfiguration has been completed.

According to the invention, said reconfiguration of resources either include: resources modification, resources addition, resources release.

According to the invention (implemented in a 3GPP UMTS network), thanks to the introduction of a second activation time synchronous at the two radio network controllers the DRNC shall not more wait up to 2500 ms before reconfiguring its internal and external resources devoted to the IP transport connections, but it can reconfigure said resources with a negligible delay after the reception of the relevant radio link reconfiguration message, to say, when the DRNC activation time is expired. Profitably, a complete time alignment between the UE and all the involved UTRAN network elements: Node B, DRNC (second RNC), and SRNC (first RNC) is achieved in the usage of transport resources.

In this way the invention allows overcoming the problems of resource usage inefficiencies and resource usage inconsistencies resolving the highlighted limitation of the standardization for radio link reconfiguration, e.g. in presence of IP based transport at the lur interface, in a manner completely different in respect of the ATM transport resources release, as illustrated in **fig.3**. In fact:
■ in the prior art based on ATM transport, a specific series of ALCAP messages exists for triggering resource modification, resource addition, and resource release both at the DRNC and Node B, and said messages are transferred between the SRNC and the DRNC and between the DRNC and the Node B after the SRNC is informed about the radio link reconfiguration has been completed by the UE;
■ by comparison, in the solution proposed by the invention there is a specific message for triggering the resource reconfiguration at the DRNC in the direction SRNC to DRNC which contains other than the activation time designed to Node B, also a second Activation Time, independent of the first one, appositely designed for synchronizing the DRNC. Differently from the known art, the DRNC triggers the reconfiguration of its own resources autonomously based on the observation of a timer.

According to a first embodiment of the invention the first radio link reconfiguration message is the RNSAP: RL RECONFIGURATION COMMIT message, appositely modified to include an additional information element "DRNC Activation Time".

According to a second embodiment of the invention the first radio link reconfiguration message is a novel RL RECONFIGURATION DRNC COMMIT message which also includes said additional information element "DRNC Activation Time". The nomenclature is compatible with the RNSAP but the name is new.

According to a variant of the invention, the SRNC behaves as foreseen by the current standardization until it receives the RRC: RB RELEASE COMPLETE or RRC RB RECONFIGURATION COMPLETE message (fig.2) from the UE, stating that the radio link has been correctly reconfigured at the UE; at this point the SRNC sends a RNSAP reconfiguration command to the DRNC. At the reception of this message, the DRNC reconfigures all internal and eternal resources, informing the SRNC when the reconfiguration is completed.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1****,** already described, shows the main functional block of a 3GPP UMTS network with highlighted some transport connections at the UTRAN's interfaces;
- **fig.2****,** already described, shows a message time diagram of resources reconfiguration according to the 3GPP current standardization for IP based transport at the lur interface;
- **fig.3****,** already described, shows a message time diagram of resources reconfiguration according to the 3GPP current standardization for ATM based transport at the UTRAN's interfaces;
- **fig.4** shows a message time diagram of release of the reconfiguration of IP based transport resources according to a first embodiment of the present invention;
- **fig.5** shows the structure of a RADIO LINK RECONFIGURATION COMMIT message for upgrading the RNSAP protocol as suggested by the first embodiment of fig.4;
- **fig.6** shows a message time diagram of the reconfiguration of IP based transport resources according to a second embodiment of the present invention;
- **fig.7** shows the structure of a RADIO LINK RECONFIGURATION DRNC COMMIT message for upgrading the RNSAP protocol as suggested by the second embodiment of fig.6;
- **fig.8** shows a message time diagram of the reconfiguration of IP based transport resources according to a variant of the present invention;
- **fig.9** shows the structure of a novel RADIO LINK RECONFIGURATION EXECUTION COMMAND message for upgrading the RNSAP protocol as suggested by the variant of fig.8
- **fig.10** shows the structure of a novel RADIO LINK RECONFIGURATION COMPLETE message for upgrading the RNSAP protocol as suggested by the variant of **fig.8****.**

### DETAILED DESCRIPTION OF SOME EMBODIMENTS OF THE INVENTION

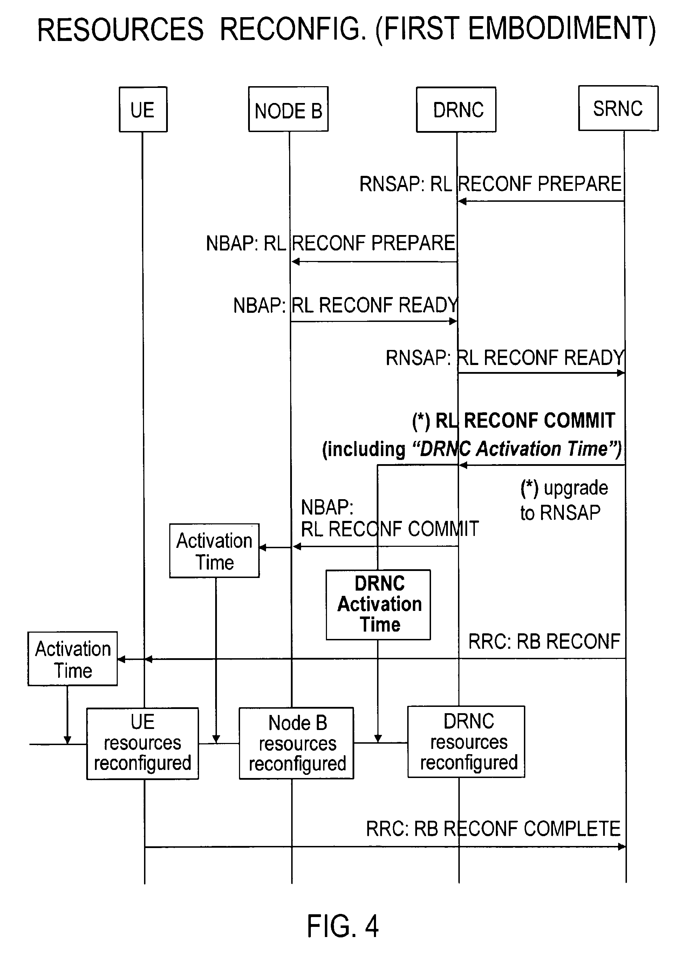

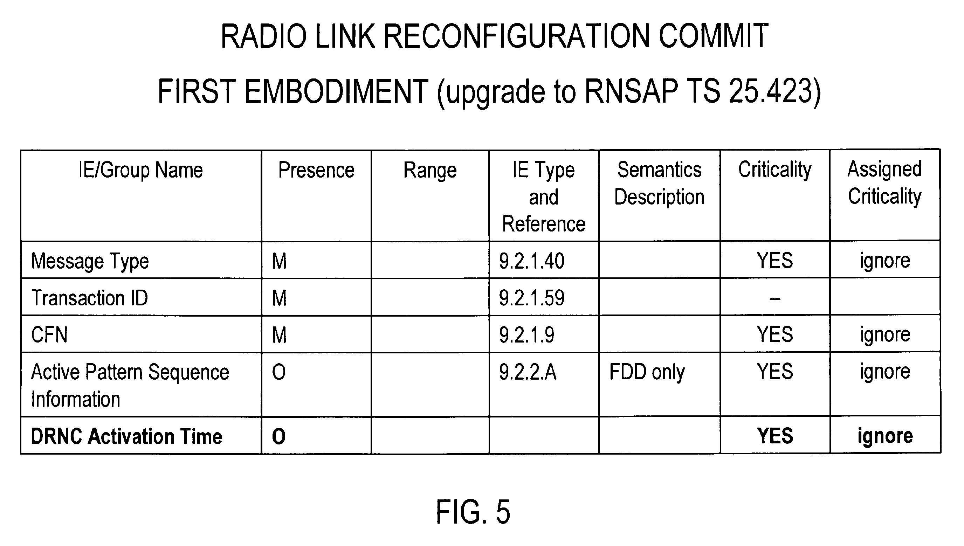

A first embodiment of the invention aimed to speed up the reconfiguration of transport resources (which could either encompass modification, or addition, or release of resources) in 3GPP UMTS is illustrated with the help of **fig.4** and **fig.5****.** In particular, the method (protocol) is described in **fig.4****,** while **fig.5** reports the message introduced as new. Without limitation, the invention is described for an IP based transport connection at the lur interface.

With reference to **fig.4****,** we may realise that the various execution steps are similar to the ones already described with reference to **fig.2****,** except for some modifications and additions. More in particular:
STEP 1)-As in fig.2.
STEP 2) - As in fig.2, with the only exception that the RNSAP message "RL RECONFIGURATION COMMIT" is modified to include a new "ad hoc" Information Element (IE) for triggering the resources reconfiguration at the DRNC. More precisely, it is understood that the SRNC can, based on the kind of transport connections at the lur interface (known at the SRNC), decide to behave towards the DRNC as in the following:
   ■ sends to DRNC the usual RNSAP: RL RECONFIGURATION COMMIT message for the case of non-IP based transport connections at the lur interface, or
   ■ sends to DRNC the modified-RNSAP "RL RECONFIGURATION COMMIT" for the case of IP based transport connections at the lur interface. Profitably, the new IE is a DRNC Activation Time indicated in **fig.5** derived by a time reference which is common to the SRNC and DRNC. The DRNC which receives this modified-RNSAP message and decodes the new IE can switch to the prepared configuration when the DRNC Activation Time is reached and therefore correctly reconfigure its internal and external resources for servicing the IP transport connections at the lur interface. If the new IE is not decoded the DRNC continues to behave according to the known procedures and the compatibility with other type of transports at the lur interface is preserved.
STEP 3) - As in fig.2.
STEP 4) - As in fig.2.
STEP 5) - As in fig.2.

**Fig.5** illustrates the RADIO LINK RECONFIGURATION COMMIT message used by the SRNC to promote internal and external resources reconfiguration synchronization at the DRNC. The conventional tabled description is used. This message is derived from the homonym RNSAP message by the only inclusion of a field relevant to the DRNC Activation Time IE indicated in the last line. The nomenclature used to describe the DRNC Activation Time IE adopts similar description rules as adopted by 3GPP, so this message can be proposed for upgrading the RNSAP protocol described in TS 25.423.

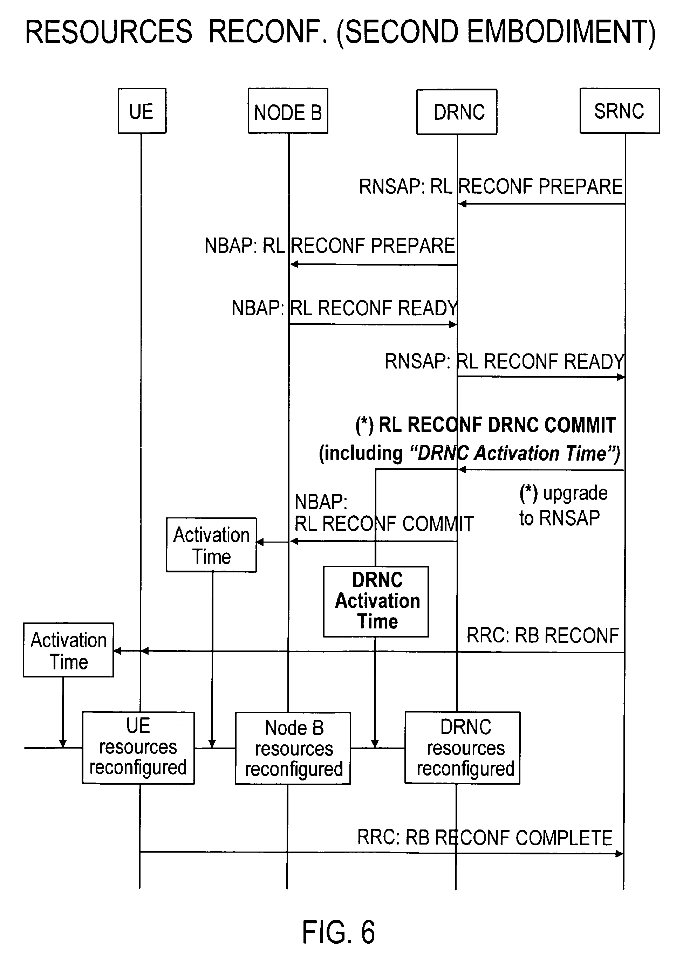

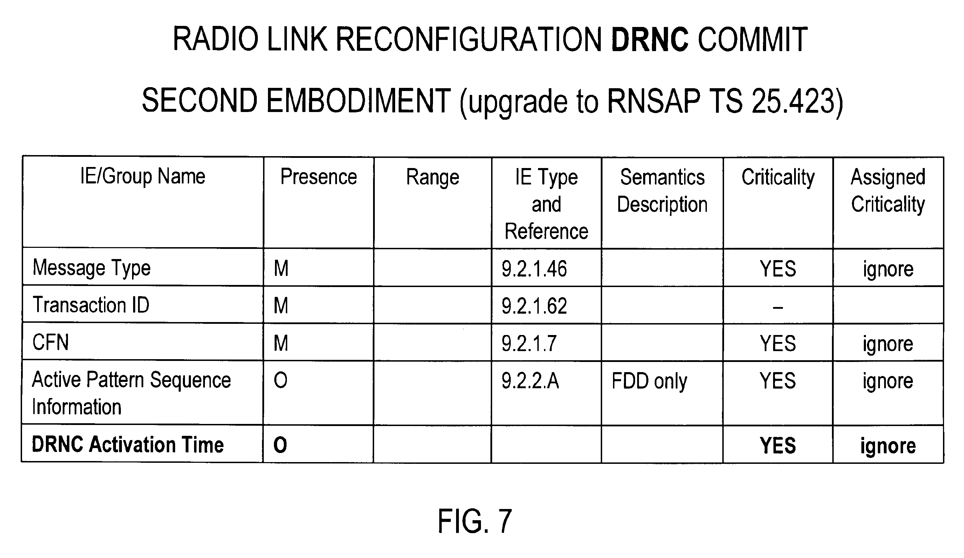

A second embodiment of the invention aimed to speed up the reconfiguration of transport resources (which could either encompass modification, or addition, or release of resources) in 3GPP UMTS is illustrated with the help of **fig.6** and **fig.7****.** In particular, the method (protocol) is described in **fig.6****,** while **fig.7** reports the message introduced as new. Without limitation, the invention is described for an IP based transport connection at the lur interface.

With reference to **fig.6****,** we may realise that the various execution steps are similar to the ones already described with reference to the first embodiment of **fig.4****,** with the only exception that the previous modified-RNSAP RADIO LINK RECONFIGURATION COMMIT message is replaced by a new RADIO LINK RECONFIGURATION DRNC COMMIT message reported in **fig.7****.** The difference between the two messages is only in the name of the message that in the second case is expressed by a new code configuration.

**Fig.7** illustrates the RADIO LINK RECONFIGURATION DRNC COMMIT message used by the SRNC to promote internal and external resources reconfiguration synchronization at the DRNC. The conventional tabular description is used. This message is derived from the homonym RNSAP message by:
■ the inclusion of a field relevant to the DRNC Activation Time IE indicated in the last line;
■ the specification of a new name in the Group Name IE.
The nomenclature used to describe the Message Name IE and the DRNC Activation Time IE adopts similar description rules as adopted by 3GPP, so this message can be proposed for upgrading the RNSAP protocol described in TS 25.423.

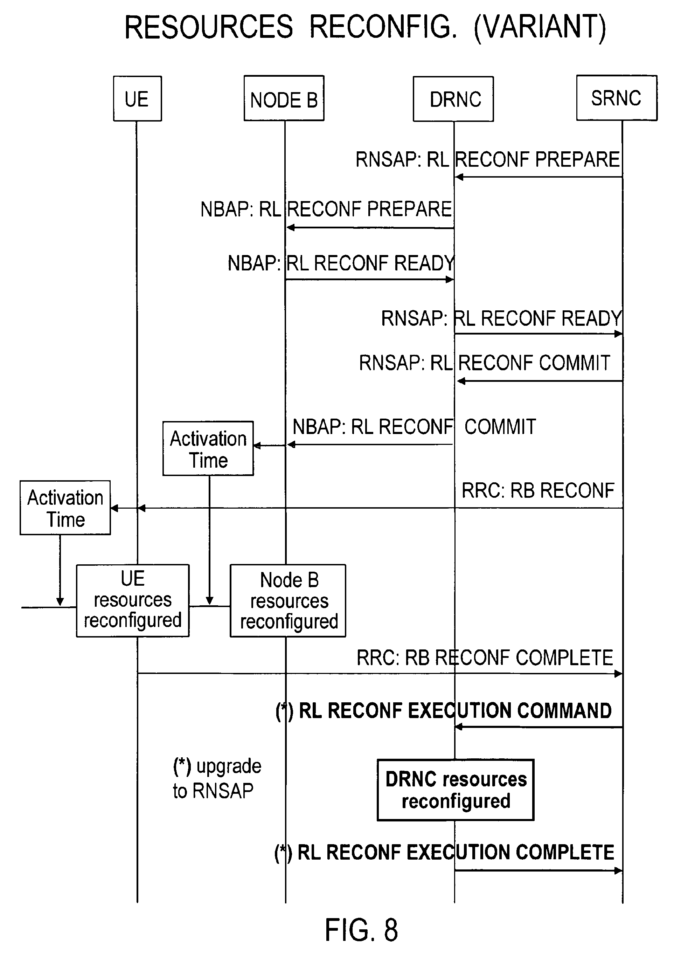

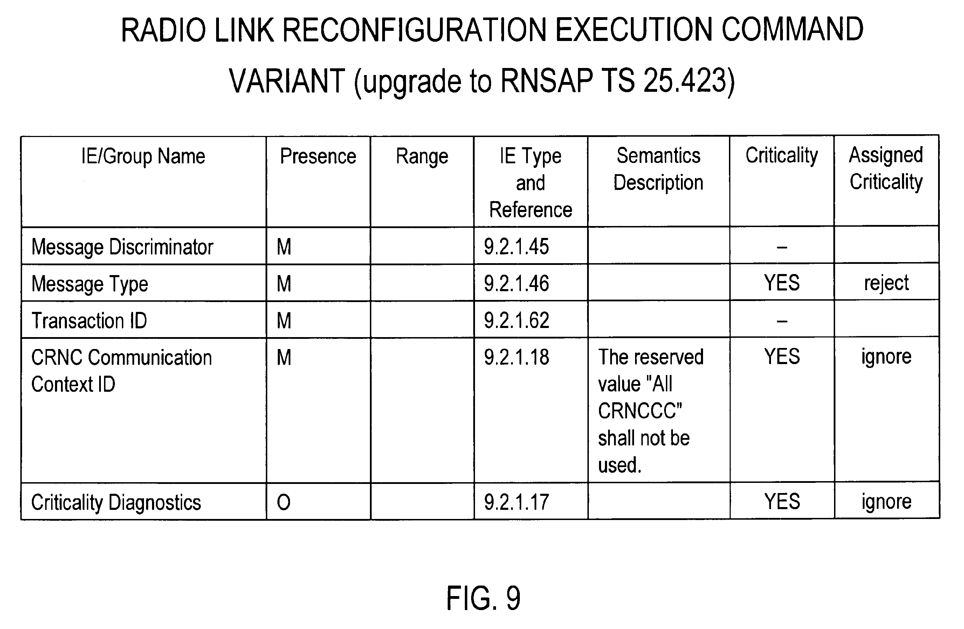

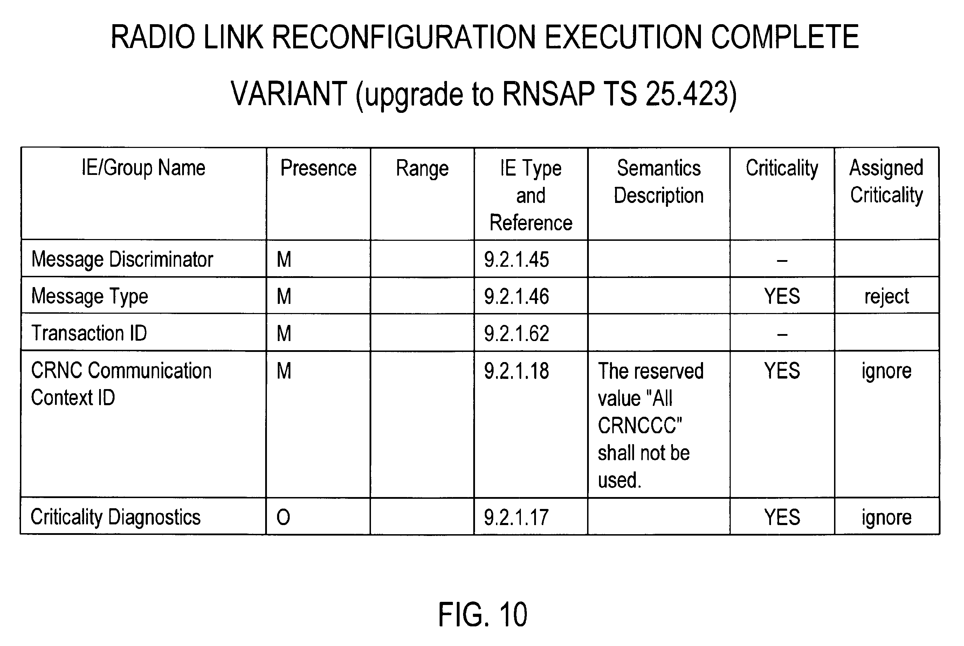

A variant of the invention described up to now also aimed to speed up the reconfiguration of transport resources (which could either encompass modification, or addition, or release of resources) in 3GPP UMTS is illustrated with the help of **fig.8** to **10****.** In particular, the variant of the method (protocol) is described in **fig.8****,** while **fig.9** and **10** report the messages introduced as new. Without limitation, the invention is described for an IP based transport connection at the lur interface.

With reference to **fig.8****,** we may realise that the various execution steps are similar to the ones already described with reference to the **fig.2****,** with the only addition of some execution steps after STEP 5). The additional execution steps can be grouped for the only aim of the description into a single STEP 6) that is described in the following. STEP 6) - The SRNC sends to the DRNC a new message called, without limitation, RL RECONF EXECUTION COMMAND, obtained by modifying the homonym RNSAP: RL RECONF COMMIT message. The DRNC, when receives the RL RECONF EXECUTION COMMAND message can switch to the prepared configuration for servicing the IP transport connections at the lur interface. The DRNC, as soon as the reconfiguration is actualized, sends back message a new message called, without limitation, RL RECONF EXECUTION COMPLETE to the SRNC. This last message is obtained by modifying the homonym RNSAP: RL COMMIT message.

**Fig.9** illustrates the RL RECONF EXECUTION COMMAND message used by the SRNC to trigger internal and external resources reconfiguration synchronization at the DRNC. The conventional tabular description is used. As said, this message is derived from RNSAP: RL COMMIT message by the specification of a new name in the Group Name IE. The nomenclature used to describe the Message Name IE adopts similar description rules as adopted by 3GPP, so this message can be proposed for upgrading the RNSAP protocol described in TS 25.423.

**Fig.10** illustrates the RL RECONF EXECUTION COMPLETE message used by the DRNC to inform the SRNC about the completion of its internal and external resources reconfiguration. The conventional tabular description is used. As said, this message is derived from RNSAP: RL COMMIT message by the specification of a new name in the Group Name IE. The nomenclature used to describe the Message Name IE adopts similar description rules as adopted by 3GPP, so this message can be proposed for upgrading the RNSAP protocol described in TS 25.423.

Also in the case of the variant, the introduction of a new modified-RNSAP message RL RECONFIGURATION EXECUTTION COMMAND allows achieving a complete alignment in the usage of resources between the UE and all the involved UTRAN network elements (Node B, DRNC and SRNC).

Although the invention has been described with particular reference to a preferred embodiment for 3GPP UMTS for IP based transport connections at the lur interface, it will be evident to those skilled in the art, that the present invention is not limited thereto, but further variations and modifications may be applied without departing from the scope of the claims. In particular, the invention, independently of the type of transport at the lur interface, encompasses all the embodiments which cause a defect of synchronization of the reconfiguration of resources at the DRNC due to the absence of a feedback from the Node B.

## Claims

1. Method for reconfiguring the resources assigned to the elements (4, 5, 7) of a radio access network (3) of a cellular communication system and to a user equipment (2) in order to give support to their reciprocal connection through a radio link, including the steps of:
a) sending, by a first radio network controller (4) charged to serve said user equipment (2) to a second radio network controller (5) acting on behalf of the first one (4), a first reconfiguration message including a first information element about a first activation time assigned by the first radio network controller (4) to the base station (7) for triggering the very time instant at which the new configuration shall be actualized at the base station (7);
b) receiving, by the second radio network controller (5), said first reconfiguration message, and sending to the base station (7) a second reconfiguration message including the only first information element;
c) sending, by the first radio network controller (4) to the user equipment (2), a radio bearer reconfiguration message including said first information element;
d) receiving, by the base station (7), said first radio link reconfiguration message and, when the first activation time is reached, reconfiguring its internal and external resources needed to handle the external transport connections;
e) receiving, by the user equipment (2), said radio bearer reconfiguration message and, when the activation time is reached, reconfiguring all the bearer resources assigned to the radio link,
**characterized in that** includes the further steps of:
f) introducing, by the first radio network controller (4), into said first radio link reconfiguration message a second information element about a second activation time derived by a time reference which is common to the first and the second radio network controllers (4, 5), assigned by the first radio network controller (4) for triggering the very time instant at which the new configuration shall be actualized at the second radio network controller (5);
g) decoding, by the second radio network controller (5), the second information element included in the received first reconfiguration message and when the second activation time is reached, reconfiguring its internal and external resources needed to handle the external transport connections.

2. The method of claim 1, **characterized in that** at step f) said second information element is included into the second radio link reconfiguration message when the transport connections at the interface between the first and the second radio network controller (4, 5) are based on the Internet Protocol.

3. The method of claim 1 or 2, **characterized in that** the resources reconfiguration includes modification of resources.

4. The method of claim 1 or 2, **characterized in that** the resources reconfiguration includes addition of resources.

5. The method of claim 1 or 2, **characterized in that** the resources reconfiguration includes release of resources.

6. The method of any claim from 1 to 5, **characterized in that** the user equipment (2), independently of steps after step e) sends to the first radio network controller (4) a Radio Bearer Reconfiguration Complete message to inform it that the radio link reconfiguration has been completed.

7. The method of any claim from 1 to 6, **characterized in that** it is achievable by modification of a radio access network (3) belonging to an Universal Mobile Telecommunication System, known as UMTS, described in the evolving standardization looked after by 3rd Generation Partnership Project, known as 3GPP.

8. The method of claim 7, **characterized in that** said first radio link reconfiguration message is a modification of the Radio Network Subsystem Application Part protocol, called RNSAP.

9. The method of claim 8, **characterized in that** said first radio link reconfiguration message has a nomenclature compatible with RNSAP.
